# EUROPÄISCHE PATENTSCHRIFT

(11) **EP 1 655 580 B1**
(45) Veröffentlichungstag und Bekanntmachung des Hinweises auf die Patenterteilung: **21.05.2008**
(21) Anmeldenummer: 05019475.2
(22) Anmeldetag: 07.09.2005
(51) Int. Cl.: G01D 5/244

(54) **Verfahren zur Berechnung von Bewegungsdaten**
Method of computation of motion data
Méthode de calcul des données de mouvement

(30) Priorität: 06.11.2004 DE 102004053715
(43) Veröffentlichungstag der Anmeldung: 10.05.2006
(73) Patentinhaber: Bosch Rexroth AG, 70184 Stuttgart (DE)
(72) Erfinder: Wahler, Matthias, 97450 Müdesheim (DE)

(56) Entgegenhaltungen:
- DE-A1- 10 149 174
- DE-A1- 10 233 604
- DE-C1- 19 841 763
- US-A- 5 162 798
- MANN D: "VERBESSERTE AUSWERTUNG VON INKREMENTELLEN GEBERSYSTEMEN DURCH OVERSAMPLING" CONFERENCE PROCEEDINGS ARTICLE, 13. November 1998 (1998-11-13), Seiten 1-20, XP008013551

## Beschreibung

Die Erfindung entspringt dem Gebiet der Antriebstechnik und beschreibt ein Verfahren zur Berechnung von Bewegungsdaten gemäß dem Anspruch 1.

Es hat sich gezeigt, dass hochfrequente Maschinenresonanzen die Signals von an der Motorwelle angebrachten Feedbackeinrichtungen (Positionsgebern) verfälschen können. Die Ursache liegt darin, dass den im Spektralbereich betrachteten Feedbacksignalen die Resonanzen als Resonanzfrequenzen überlagert werden und als Spiegelfrequenzen nach der Abtastung wieder auftauchen. Für die Antriebsregelung stellen diese Spiegelfrequenzen Störsignale dar. Die Antriebsregelung erkennt dann das Vorhandensein einer Frequenz, die eigentlich im Regelkreis nicht vorhanden sein dürfte und versucht diese auszuregeln. Dies führt zu schwer reproduzierbaren Fehlfunktionen und Ungenauigkeiten.

Im Rahmen eines Testaufbaus wurde eine Motorwelle mit einer Schwungmasse versehen, diese lieferte im Spektralbereich eine Resonanzfrequenz von 2,6 kHz. Diese Resonanzfrequenz war im Spektralbereich dem sich zyklisch gemäß des Abtasttheorems widerholenden Spektrum der Gebersignalfrequenz überlagert und verursachte bei Verwendung einer Abtastrate von 2 kHz bzw. 4 kHz Spiegelfrequenzen im relevanten 1 kHz breiten Nutzfrequenzbereich bei 0,6 kHz bzw. außerhalb des Nutzfrequenzbereich bei 1,4 kHz.

Insbesondere bei Direktantrieben, welche in der Regel unmittelbar und damit sehr steif mit der anzutreibenden Vorrichtung verbunden sind, werden aufgrund dieser sehr steifen Ankopplung hochfrequente Maschinenresonanzen erzeugt, welche über das Feedback eingekoppelt werden und die Regeleigenschaften und Präzision des Antriebes verschlechtern. Die Resonanzen machen sich dabei in Form von Spiegelfrequenzen besonders kritisch bzw. störend bemerkbar. Immer wenn hochfrequente Resonanzen auftreten, die oberhalb der halben Abtastrate bei der Positionsbildung mittels eines digitalen Antriebs liegen, versucht der Antrieb die dabei entstehenden Spiegelfrequenzen auszuregeln und regt dadurch im Prinzip erst aktiv diese Frequenzen an.

Aus der DE 198 41 763 C1 ist ein Verfahren zur digitalen Auswertung der analogen Ausgangssignale eines Resolvers bekannt. Dabei werden an den Statorwicklungen Signale abgegriffen und nach einer Überabtastung in digitale Signale umgesetzt. Nach einer anschließenden Filterung werden die gefilterten Signale mit dem für die vorangehende Überabtastung angewendeten Faktor einer Unterabtastung unterzogen.

Es ist die Aufgabe der Erfindung ein Verfahren für eine Anwendung der Eingangs genannten Art anzugeben, bei dem Maschinenresonanzen weitestgehend unterdrückt und möglichst keine unerwünschten Spiegelfrequenzen erzeugt werden.

Erfindungsgemäß wird dies dadurch gelöst, dass eine erste Abtastung der von der Bewegungserfassung gelieferten Bewegungsdaten nach einer ersten Frequenzbandbegrenzung mit anschließender Umrechnung der Abtastwerte gemäß einer trigonometrischen Rechenvorschrift erfolgt und die aus der Umrechnung gewonnene Signalfolge erneut frequenzbandbegrenzt und abgetastet wird.

Bei der ersten Abtastung mittels der Oversamplingmethode liegt die Abtastrate deutlich über der maximal verwertbaren Signalfrequenz, beispielsweise bei 8 kHz oder 16 kHz oder noch höher. Damit ist sichergestellt, dass möglichst viele Bewegungserfassungssysteme, deren Ausgangssignale unterschiedlichste Frequenzbereiche umfassen können, verwendbar sind. Bei der ersten Abtastung legt man daher großen Wert auf eine im Verhältnis zur Signalbandbreite relativ hohe Abtastrate, um bereits bei diesem Schritt Spiegelfrequenzen aus dem Nutzfrequenzband mittels Überabtastung heraus zu verlagern. Die zweite Weiterbearbeitung der Signalfolge erfolgt im Gegensatz zur ersten Abtastung mit wesentlich geringerer Abtastrate, beispielsweise mit einem Viertel oder einem Achtel der ersten Abtastrate.

Damit ist erfindungsgemäß die Abtastfrequenz der ersten Überabtastung entsprechend der Theorie von Shannon so gewählt, dass Maschinenresonanzen in Form von Spiegelfrequenzen außerhalb der Nutzbandbreite der Bewegungserfassung bleiben.

Das heißt vor der Weiterverarbeitung mittels eines Microcontrollers mit deutlich verminderter Taktung muss eine erneute Bandbegrenzung der zuvor gebildeten Positionswerte erfolgen, um nun erneut unerwünschten Spiegelfrequenzen vorzubeugen.

Mittels der oben erwähnten Schritte werden damit Spiegelfrequenzen innerhalb der Nutzbandbreite in allen Verarbeitungsphasen vermieden und damit vom Antriebsregelkreis ausgekoppelt, womit die Aufgabe gelöst wäre.

Zusammenfassend liegt demnach der Kern der Erfindung darin, dass man eine Überabtastung der Geberspursignale mit anschließender Positionsbildung und Bandbegrenzung mittels eines Aliasingfilters durchführt, bevor die Positionswerte im Antriebscontroller im Regelungstakt weiterverarbeitet.
Vorzugsweise handelt es sich bei den Bewegungsdaten um Positionen, Wege oder Winkel und die Umrechnung erfolgt unter Verwendung sinusförmiger Signale von der Bewegungserfassung. Die Berechnung einer Position erfolgt mittels der Umkehrfunktion "arc" nach der Formel position = arc [cos(x)/sin(x)]. Hochfrequente Maschinenresonanzen können insbesondere die korrekte Positionierung der Motorwelle negativ beeinflussen, die Erfindung hilft dies zu vermeiden.

Vorteilhafterweise wird die abgetastete Signalfolge, welche aus der Umrechnung resultiert, an eine Weiterverarbeitungseinheit, beispielsweise einen antriebsinternen Microcontroller weitergeleitet. Dieser kann die gewonnenen Werte unmittelbar einem Regelalgorithmus zuführen, wobei die Umrechnung selbst nicht die Rechenkapazität des Microcontrollers erfordert und die Weiterverarbeitung mittels des Mikrocontrollers auch mit wesentlich geringerer Taktrate erfolgen kann.

Besonders vorteilhaft ist es, wenn zumindest Teilschritte, insbesondere jedoch die Umrechnung, vorzugsweise aber alle Verfahrensschritte, mittels eines FPGA (Field Programmable Gate Array) mit hoher externer Taktrate realisiert sind. Übliche Taktfrequenzen liegen hier bei 1000 kHz. Durch die Verwendung moderner FPGAs für diesen Zweck, kann auf den Einsatz von teuren Signalprozessoren (DSPs) verzichtet und die gewünschte Funktionalität preiswert realisiert werden. Ganz besonders vorteilhaft ist es, wenn der Antrieb bzw. der Antriebsregler das FPGA mit umfasst, dies liefert eine platzsparende und kompakte Ausgestaltungsform der Erfindung.

Vorteilhafterweise erfolgt die Bewegungserfassung für Positionsdaten mittels eines in der Regel zweispurig ausgeführten Absolutwert- oder eines Inkrementalgebers mit sinusförmigen Ausgangssignalen. Auch ein Resolver wäre verwendbar. Die von diesen Erfassungssystemen gelieferten analogen, sinusförmigen Signale können leicht und direkt der ersten Abtaststufe zugeführt werden. Auch zum Hiperface und/oder Endat-Standard kompatible Geber kommen in Frage.

Ganz besonders vorteilhaft wirkt sich die Erfindung aus, wenn es sich bei dem Antrieb um einen Direktantrieb mit digitaler Servoregelung handelt. Bei Direktantrieben ist die oftmals gewünschte sehr steife Kopplung mit der anzutreibenden Mechanik die Ursache für eingekoppelte und hoch frequente Maschinenresonanzen. Je spielfreier die Kopplung ist, desto höhere Resonanzfrequenzen bilden sich aus. Diese Resonanzfrequenzen sind oftmals derart gelagert, dass die bei der Abtastung entstehenden Spiegelfrequenzen in das Nutzfrequenzband fallen.

### Bezugszeichenliste:

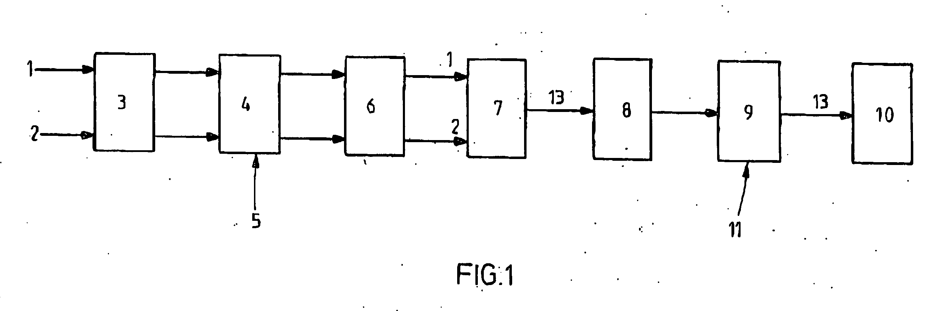

- 1: Erste Geberspur
- 2: Zweite Geberspur
- 3: Tiefpass
- 4: Sample & Hold
- 5: Erste Abtastrate
- 6: ADC
- 7: Umrechnung
- 8: Antialiasing Filter
- 9: Sample & Hold
- 10: Nachverarbeitungsstufe
- 11: Zweite Abtastrate
- 12: Positionssignalfolge
Figur 1 zeigt die erfindungsgemäße Anordnung von Vorrichtungen zur Umsetzung des Verfahrens bei der Berechnung speziell von Positionsdaten. Es sind dargestellt eine erste Geberspur 1, eine zweite Geberspur 2, ein Tiefpass 3, eine Sample & Hold Schaltung 4 mit externem Takteingang 5, ein Analog-Digitalwandler 6 mit beispielsweise 12 Bit Auflösung, eine Umrecheneinheit 7, ein Antialiasing Filter 8, eine Sample & Hold Schaltung 9 mit externem Takteingang 11, eine nachfolgende Recheneinheit 10 und die von den Einheiten 7, 8 und 9 in diesem Beispiel gemeinsam genutzte Plattform (FPGA) 12, sowie die Signalfolge 13.

Eine erste Abtastung der beiden sinusförmigen Ausgangsfunktionen der zweispurig ausgestalteten Bewegungserfassung (Feedbackeinheit), hier der Geberspur 1 (cos x) und der Geberspur 2 (sin x) erfolgt nach einer ersten Frequenzbandbegrenzung (Bspw. 100 kHz) durch den Tiefpass 3 mittels der Sample & Hold - Schaltung 4 in Form einer Überabtastung 5 nach der Oversamplingmethode (Bspw. mit 16 kHz) mit anschließender Analog/Digitalwandlung 6. Diese Überabtastung vermeidet die Existenz von Spiegelfrequenzen in der Nutzbandbreite wobei die Abtastfrequenz so gewählt werden muss, dass man nach der Theorie von Shannon alle theoretisch möglichen Resonanzen (hochfrequente Maschinenresonanzen) erfasst.

Die Umrechnung 7 der zuvor aus sinusförmigen Signalen gewonnenen Abtastwerte gemäß der Rechenvorschrift position = arc [cos(x)/sin(x)] wird anschließend durchgeführt. Nach der Umrechnung 7 liegt eine zeitdiskrete Signalfoge vor, welche die vom Geber gelieferten Positionen in digitaler Form repräsentiert. Es erfolgt dann erfindungsgemäß eine erneute Frequenzbandbegrenzung mittels eines Antialiasingfilters 8 und eine weitere Verarbeitung 10 mit geringerer Taktrate 9, beispielsweise 2 kHz.

Denkbar wäre es auch, das FPGA durch einen Digitalen Signalprozessor (DSPs) zu ersetzen. Das FPGA wird jedoch preiswerter und auch einfacher handhabbar für eine Massenfertigung sein.

Aus Gründen der Kompaktheit werden die Verfahrensschritte mittels in die Antriebsreglerelektronik integrierte Mittel ausgeführt. Denkbar wäre es jedoch auch die Verfahrensschritte direkt in einem Positionsgeber zu integrieren, so dass dieser unmittelbar eine Signalfolge digitaler Positionswerte an den Antriebsregler liefert.

## Patentansprüche

1. Verfahren zur Berechnung von Bewegungsdaten für einen Direktantrieb mit Motor, digitaler Servoregelung und Bewegungserfassung, wobei eine erste Überabtastung (4, 5, 6) in Bezug auf die Signalbandbreite der von der Bewegungserfassung gelieferten Bewegungsdaten (1, 2) nach einer ersten Frequenzbandbegrenzung (3) mit anschließender Umrechnung (7) der Abtastwerte (1, 2) gemäß einer trigonometrischen Rechenvorschrift erfolgt und die aus der Umrechnung (7) gewonnene Signalfolge (13) erneut frequenzbandbegrenzt (8) und mit im Gegensatz zur ersten Überabtastung (4, 5, 6) verringerter Abtastrate abgetastet (9, 11) wird, vorzugsweise mit einem Viertel oder einem Achtel der ersten Abtastrate, **dadurch gekennzeichnet, dass** die Abtastfrequenz der ersten Überabtastung (4, 5, 6) entsprechend der Theorie von Shannon so gewählt ist, dass alle theoretisch möglichen Maschinenresonanzen in Form von Spiegelfrequenzen außerhalb der Nutzbandbreite der Bewegungserfassung bleiben.

2. Verfahren nach Anspruch 1, wobei die Signalfolge (13) von einer Weiterverarbeitungseinheit (10) verarbeitet wird.

3. Verfahren nach einem der vorhergehenden Ansprüche, wobei im Antrieb zumindest Teile der Verfahrensschritte mittels eines FPGA realisiert sind.

4. Verfahren nach einem der vorhergehenden Ansprüche, wobei die Bewegungserfassung sinusförmige Ausgangssignale liefert.

5. Verfahren nach einem der vorhergehenden Ansprüche, wobei die erste Frequenzbandbegrenzung mittels eines Tiefpassfilters (3) erfolgt.

6. Verfahren nach einem der vorhergehenden Ansprüche, wobei die erste Abtastung mittels einer Sample & Hold - Schaltung (4, 5) erfolgt.

## Claims

1. Method of computation of motion data for a direct drive with motor, digital servo control and motion detection, wherein a first over sampling (4, 5, 6) with respect to the signal bandwidth of the motion data (1, 2) supplied by the motion detection is effected after a first frequency band limiting (3) with subsequent conversion (7) of the samples (1, 2) in accordance with a trigonometrical computation specification and the signal sequence (13) obtained from the conversion (7) is once again subjected to frequency band limiting (8) and sampled (9, 11) with a reduced sampling rate in contrast to the first over sampling (4, 5, 6), preferably with one quarter or one eighth of the first sampling rate, **characterized in that** the sampling frequency of the first over sampling (4, 5, 6) is chosen in accordance with Shannon's theory such that all theoretically possible machine resonances in the form of image frequencies remain outside the useful bandwidth of the motion detection.

2. Method according to Claim 1, wherein the signal sequence (13) is processed by a further processing unit (10).

3. Method according to any of the preceding claims, wherein in the drive at least parts of the method steps are realized by means of an FPGA.

4. Method according to any of the preceding claims, wherein the motion detection supplies sinusoidal output signals.

5. Method according to any of the preceding claims, wherein the first frequency band limiting is effected by means of a low-pass filter (3).

6. Method according to any of the preceding claims, wherein the first sampling is effected by means of a sample & hold circuit (4, 5).

## Revendications

1. Procédé de calcul des données de mouvement d'un entraînement direct comportant un moteur, un asservissement numérique et une saisie de mouvement selon lequel
on effectue une première détection globale (4, 5, 6) par rapport à la largeur de bande de signal des données de mouvement (1, 2) fourni par le moyen de saisie de mouvement, après une première limitation (3) de la bande de fréquence suivie d'une conversion (7) des valeurs de détection (1, 2) selon une règle de calcul trigonométrique, et
on limite de nouveau la bande de fréquence (8) de la suite de signaux (13) résultant de la conversion (7) et on détecte (9, 11) avec un taux de détection réduit contrairement à la première détection (4, 5, 6), de préférence avec un quart ou un huitième du premier taux de détection,
**caractérisé en ce qu'**
on sélectionne la fréquence de détection de la première détection globale (4, 5, 6) choisie selon la théorie de Shannon de façon que toutes les résonances théoriquement possibles de la machine sous la forme de fréquence miroir restent à l'extérieur de la largeur de bande utile de la saisie de mouvement.

2. Procédé selon la revendication 1, selon lequel on traite la suite de signaux (13) par une unité de poursuite de traitement (10).

3. Procédé selon l'une des revendications précédentes, selon lequel on réalise dans l'entrée au moins des parties des étapes de procédé à l'aide d'un FPGA.

4. Procédé selon l'une des revendications précédentes, selon lequel la saisie de mouvement fournit des signaux de sortie de forme sinusoïdale.

5. Procédé selon l'une des revendications précédentes, selon lequel la première limitation de bande fréquence se fait à l'aide filtre passe-bas (3).

6. Procédé selon l'une des revendications précédentes, selon lequel la première détection se fait par un circuit d'échantillonnage et de maintien (4, 5).
